# EUROPÄISCHE PATENTSCHRIFT

(11) **EP 3 066 792 B1**
(45) Veröffentlichungstag und Bekanntmachung des Hinweises auf die Patenterteilung: **20.02.2019**
(21) Anmeldenummer: 14786877.2
(22) Anmeldetag: 20.10.2014
(51) Int. Cl.: H04L 12/40, H04L 12/413, H04L 25/02, H04B 1/16, H04L 25/06

(54) **TEILNEHMERSTATION FÜR EIN BUSSYSTEM UND VERFAHREN ZUR VERBESSERUNG DER EMPFANGSQUALITÄT IN EINEM BUSSYSTEM**
SUBSCRIBER STATION FOR A BUS SYSTEM AND METHOD FOR IMPROVING THE RECEPTION QUALITY IN A BUS SYSTEM
STATION DE PARTICIPANT À UN SYSTÈME DE BUS ET PROCÉDÉ POUR AMÉLIORER LA QUALITÉ DE RÉCEPTION DANS UN SYSTÈME DE BUS

(30) Priorität: 08.11.2013 DE 102013222790
(43) Veröffentlichungstag der Anmeldung: 14.09.2016
(73) Patentinhaber: Robert Bosch GmbH, 70442 Stuttgart (DE)
(72) Erfinder: WALKER, Steffen, 72770 Reutlingen (DE); HILGENBERG, Bernd, 72760 Reutlingen (DE)
(86) Internationale Anmeldenummer: PCT/EP2014/072412
(87) Internationale Veröffentlichungsnummer: WO 2015/067458

(56) Entgegenhaltungen:
- WO-A1-2012/084696
- US-A- 4 888 764
- US-A1- 2009 279 635

## Beschreibung

### Technisches Gebiet

Die vorliegende Erfindung betrifft eine Teilnehmerstation für ein Bussystem und ein Verfahren zur Verbesserung der Empfangsqualität in einem Bussystem.

### Stand der Technik

Das CAN Bussystem kommt bei der Vernetzung von Geräten zur Kommunikation beispielsweise in einem Fahrzeug zum Einsatz und ist aufgrund seiner parallelen Topologie für viele weitere Kommunikationsanwendungen sehr gut geeignet. Beim CAN-Bussystem werden Nachrichten mit dem CAN-Protokoll übertragen, wie es in der CAN-Spezifikation in der ISO11898 beschrieben ist.

US 2009/0279635 A1 zeigt einen Transceiver zum Empfang eines Differenzspannungssignals, das beispielsweise gemäß der zuvor genannten CAN-Spezifikation übertragen wird. Der Transceiver ermöglicht eine korrekte Interpretation von Differenzspannungssignalen unabhängig von der Polarität der Drähte oder Adern, auf denen das Differenzspannungssignal übertragen wird.

In der letzten Zeit wurden hierfür zudem Techniken vorgeschlagen, wie beispielsweise CAN-FD, bei welchen Nachrichten entsprechend der Spezifikation "CAN with Flexible Data-Rate, Specification Version 1.0" (Quelle http://www.semiconductors.bosch.de) übertragen werden, usw. Bei solchen Techniken wird die maximal mögliche Datenrate durch Einsatz einer höheren Taktung im Bereich der Datenfelder über einen Wert von 1 MBit/s hinaus gesteigert. Aufgrund des stetig steigenden Datenaufkommens im Bussystem wird durch die Einführung von CAN-FD die Migration existierender Steuergeräte und Fahrzeug-Plattformen zu höheren Datenraten ermöglicht.

Bei der Übertragung der Signale auf dem Bussystem wird je nach zu übertragenden Daten zwischen einem hohen und einem niedrigen Signalzustand oder umgekehrt geschaltet, wobei der hohe Signalzustand auch als Dominantzustand und der niedrige Signalzustand auch als Rezessivzustand bezeichnet wird. Hierbei ist ein auf dem Bus übertragenes Signal, das Bussignal, gegenüber einem Sendesignal einer Teilnehmerstation des Bussystems verzögert. Zudem ist ein Empfangssignal bei einer weiteren Teilnehmerstation des Bussystems gegenüber dem Bussignal verzögert, das sich aufgrund des Sendesignals ergibt.

Schaltet das Sendesignal beispielsweise um vom Dominantzustand auf den Rezessivzustand, so benötigt das Signal auf dem Bus eine Verzögerungszeit t11, die auch als t_Neg_Sender bezeichnet werden kann, um ebenfalls von dem Dominantzustand auf den Rezessivzustand umzuschalten. Ebenso benötigt das Empfangssignal nach Umschalten des Signals auf dem Bus eine Zeit t12, die auch als t_Neg_Empfänger bezeichnet werden kann, um ebenfalls von dem Dominantzustand auf den Rezessivzustand umzuschalten. Schaltet das Sendesignal wieder von dem Rezessivzustand auf den Dominantzustand um, so benötigt das Signal auf dem Bus eine Zeit t13, die auch als t_Pos_Sender bezeichnet werden kann, um ebenfalls von dem Rezessivzustand auf den Dominantzustand umzuschalten. Ebenso benötigt das Empfangssignal nach Umschalten des Bussignals eine Zeit t14, die auch als t_Pos_Empfänger bezeichnet werden kann, um ebenfalls wieder von dem Rezessivzustand auf den Dominantzustand umzuschalten.

Ideal ist, wenn bei dem zuvor genannten Beispiel t_Pos = t_Neg gilt, wobei
t_Pos = t_Pos_Sender + t_Pos_Empfänger, und
t_Neg = t_Neg_Sender + t_Neg_Empfänger.

Problematisch ist jedoch, dass man sich mit steigender Bitrate, also beispielsweise beim Übergang von CAN zu CAN-FD, zunehmend von diesem Ideal entfernt. Folge davon ist, dass die für das Signal geforderte Bitsymmetrie nicht eingehalten wird, wodurch es im Bussystem zu fehlerhaften Übertragungen kommt.

### Offenbarung der Erfindung

Daher ist es Aufgabe der vorliegenden Erfindung, eine Teilnehmerstation für ein Bussystem und ein Verfahren zur Verbesserung der Empfangsqualität in einem Bussystem bereitzustellen, welche die zuvor genannten Probleme lösen. Insbesondere sollen eine Teilnehmerstation für ein Bussystem und ein Verfahren zur Verbesserung der Empfangsqualität in einem Bussystem bereitgestellt werden, bei welchen die Anforderungen an die Bitsymmetrie eines im Bussystem empfangenen Signals erfüllt werden, so dass keine fehlerhaften Übertragungen auftreten.

Die Aufgabe wird durch eine Teilnehmerstation für ein Bussystem nach Patentanspruch 1 gelöst. Die Teilnehmerstation umfasst eine Erfassungseinrichtung zur Erfassung eines Buszustands eines Busses des Bussystems, und eine Symmetrierungseinrichtung zur Symmetrierung, auf der Grundlage des Ergebnisses der Bestimmungseinrichtung, der Bitdauern und/oder der Verzögerungszeitdauern der steigenden und fallenden Flanke eines Bits von vom Bus empfangenen Signalen, wie in Anspruch 1 beschrieben.

Mit der Teilnehmerstation ist eine bessere Bitsymmetrie in CAN_H und CAN_L des Bussystems möglich. Dadurch werden fehlerhafte Übertragungen zwischen Teilnehmerstationen des Bussystems verhindert.

Vorteilhafte weitere Ausgestaltungen der Teilnehmerstation sind in den abhängigen Patentansprüchen angegeben.

Bei der Teilnehmerstation kann der Buszustand eine Bitrate eines auf dem Bus übertragenen Signals und/oder ein und/oder ein Rezessiv- oder Dominantzustand des Busses und/oder ein hochfrequentes Störsignal und/oder ein Spannungswert eines digitalen Signals auf dem Bus sein, welcher Spannungswert über einem vorbestimmten Wert liegt. ,

Möglicherweise ist bei der Teilnehmerstation die Erfassungseinrichtung eine erste Erfassungseinrichtung zur Erfassung eines digitalen Signals auf einem Bus des Bussystems, wenn ein Spannungswert des Signals über einem ersten vorbestimmten Wert liegt, wobei die Teilnehmerstation zudem umfasst eine zweite Erfassungseinrichtung zur Erfassung des digitalen Signals auf dem Bus des Bussystems, wenn der Spannungswert des Signals über einem zweiten vorbestimmten Wert liegt, wobei der zweite vorbestimmte Wert größer als der erste vorbestimmte Wert ist, und eine Bestimmungseinrichtung zur Bestimmung einer Differenzspannung zwischen einem Dominantzustand und einem Rezessivzustand des digitalen Signals auf dem Bus auf der Grundlage der Erfassungsergebnisse der ersten und zweiten Erfassungseinrichtung, und wobei die Symmetrierungseinrichtung ausgestaltet ist zur Symmetrierung der Bitdauern des vom Bus empfangenen Signals auf der Grundlage des Ergebnisses der Bestimmungseinrichtung.

Beispielsweise kann die Symmetrierungseinrichtung zur Nachbearbeitung der Bitdauern auf der Grundlage des Ergebnisses der Bestimmungseinrichtung und mindestens einer weiteren Erfassungseinrichtung ausgestaltet sein und/oder eine Nachbearbeitungseinrichtung kann zur digitalen Nachbearbeitung des empfangenen Signals ausgestaltet sein.

Zusätzlich oder alternativ ist es möglich, dass die Symmetrierungseinrichtung zur Anpassung mindestens eines Eingangsfilters am Empfangskomparator der Teilnehmerstation auf der Grundlage des Ergebnisses der Erfassungseinrichtung oder der Bestimmungseinrichtung ausgestaltet ist.

Die Symmetrierungseinrichtung kann auch zur Anpassung des mindestens eines Eingangsfilters durch Bandende-Programmierung oder adaptiv im Betrieb der Teilnehmerstation ausgestaltet sein.

Es ist auch möglich, dass die Symmetrierungseinrichtung zur Anpassung von Eingangsfiltern am Empfangskomparator der Teilnehmerstation durch Umschaltung der Eingangsfilter ausgestaltet ist.

Bei der Teilnehmerstation kann die Symmetrierungseinrichtung auch zur Anpassung mindestens eines Eingangsfilters am Empfangskomparator der Teilnehmerstation durch Regelung der Erkennungsschwelle des mindestens einen Eingangsfilters ausgestaltet sein.

Die zuvor beschriebene Teilnehmerstation kann Teil eines Bussystems sein, das einen Bus, und mindestens zwei Teilnehmerstationen aufweist, welche über den Bus derart miteinander verbunden sind, dass sie miteinander kommunizieren können, wobei mindestens eine der mindestens zwei Teilnehmerstationen eine der zuvor beschriebenen Teilnehmerstation ist.

Die zuvor genannte Aufgabe wird zudem durch ein Verfahren zur Verbesserung der Empfangsqualität in einem Bussystem nach Patentanspruch 10 gelöst. Das Verfahren umfasst die Schritte: Erfassen, mit einer ersten Erfassungseinrichtung, eines Buszustands eines Busses des Bussystems, und Symmetrieren, mit einer Symmetrierungseinrichtung auf der Grundlage eines Ergebnisses eines Erfassens mit der Erfassungseinrichtung, der Bitdauern oder der Verzögerungszeitdauern der steigenden und fallenden Flanke eines Bits von vom Bus empfangenen Signalen, wie in Anspruch 10 beschrieben.

Das Verfahren bietet dieselben Vorteile, wie sie zuvor in Bezug auf die Teilnehmerstation genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 Spannungsverläufe von zwei Bussignalen über der Zeit im Bussystem gemäß dem ersten Ausführungsbeispiel;
Fig. 3 ein vereinfachtes Blockschaltbild einer Empfangseinrichtung des Bussystems gemäß dem ersten Ausführungsbeispiel;
Fig. 4 Spannungsverläufe von zwei Empfangssignalen über der Zeit bei einer Teilnehmerstation des Bussystems vor einer Bitsymmetrierungsmaßnahme gemäß dem ersten Ausführungsbeispiel;
Fig. 5 Spannungsverläufe von zwei Empfangssignalen über der Zeit bei einer Teilnehmerstation des Bussystems nach einer Bitsymmetrierungsmaßnahme gemäß dem ersten Ausführungsbeispiel;
Fig. 6 ein Flussdiagramm eines Verfahren zur Verbesserung der Empfangsqualität in einem Bussystem gemäß dem ersten Ausführungsbeispiel;
Fig. 7 ein vereinfachtes Blockschaltbild einer Empfangseinrichtung des Bussystems gemäß einem zweiten Ausführungsbeispiel;
Fig. 8 ein vereinfachtes Blockschaltbild einer Empfangseinrichtung des Bussystems gemäß einem dritten Ausführungsbeispiel;
Fig. 9 ein vereinfachtes Blockschaltbild einer Empfangseinrichtung des Bussystems gemäß einem vierten Ausführungsbeispiel;
Fig. 10 einen Spannungsverlauf eines Empfangssignals über der Zeit bei einer Teilnehmerstation des Bussystems vor einer Bitsymmetrierungsmaßnahme gemäß dem vierten Ausführungsbeispiel; und
Fig. 11 einen Spannungsverlauf eines Empfangssignals über der Zeit bei einer Teilnehmerstation des Bussystems nach einer Bitsymmetrierungsmaßnahme gemäß dem vierten Ausführungsbeispiel;
Fig. 12 ein vereinfachtes Blockschaltbild einer Empfangseinrichtung des Bussystems gemäß einem fünften Ausführungsbeispiel;
Fig. 13 ein vereinfachtes Blockschaltbild einer Empfangseinrichtung des Bussystems gemäß einem sechsten Ausführungsbeispiel; und
Fig. 14 ein vereinfachtes Blockschaltbild einer Empfangseinrichtung des Bussystems gemäß einem siebenten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

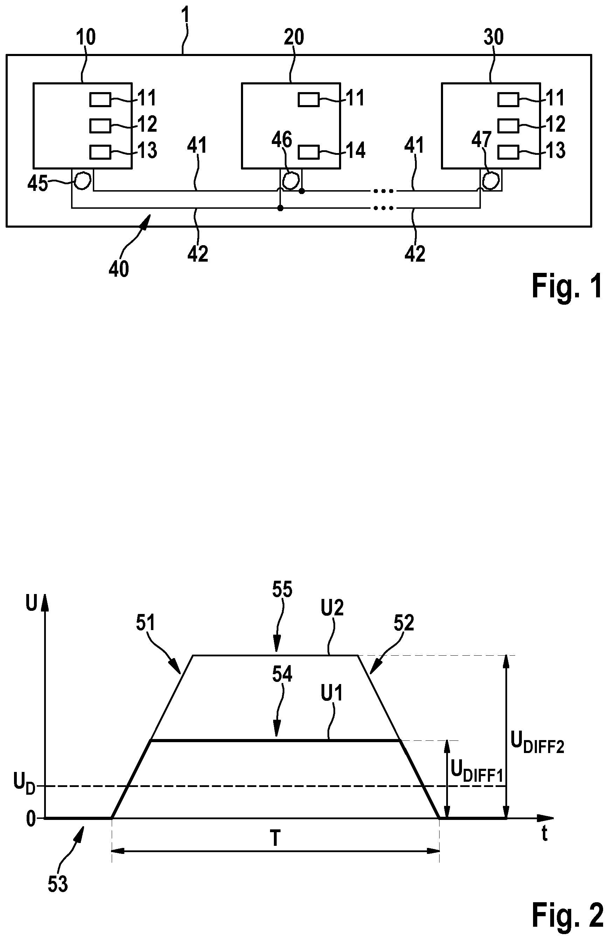

Fig. 1 zeigt ein Bussystem 1, das beispielsweise ein CAN-Bussystem, ein CAN-FD-Bussystem, usw., sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Vielzahl von Teilnehmerstationen 10, 20, 30, die jeweils an einen Bus 40 mit einer ersten Busader 41 und einer zweiten Busader 42 angeschlossen sind. Die Busadern 41, 42 können auch CAN_H und CAN_L genannt werden und dienen zur Einkopplung der dominanten Pegel im Sendezustand. Über den Bus 40 können Nachrichten 45, 46, 47 in der Form von Signalen zwischen den einzelnen Teilnehmerstationen 10, 20, 30 übertragen werden. Die Teilnehmerstationen 10, 20, 30 können beispielsweise Steuergeräte oder Anzeigevorrichtungen eines Kraftfahrzeugs sein.

Wie in Fig. 1 gezeigt, haben die Teilnehmerstationen 10, 30 jeweils eine Kommunikationssteuereinrichtung 11, eine Sendeeinrichtung 12, und eine Empfangseinrichtung 13. Die Teilnehmerstation 20 hat dagegen eine Kommunikationssteuereinrichtung 11 und eine Sende-/Empfangseinrichtung 14. Die Sendeeinrichtungen 12, die Empfangseinrichtungen 13 der Teilnehmerstationen 10, 30 und die Sende-/Empfangseinrichtung 14 der Teilnehmerstationen 20 sind jeweils direkt an den Bus 40 angeschlossen, auch wenn dies in Fig. 1 nicht dargestellt ist.

Die Kommunikationssteuereinrichtung 11 dient zur Steuerung einer Kommunikation der jeweiligen Teilnehmerstation 10, 20, 30 über den Bus 40 mit einer anderen Teilnehmerstation der an den Bus 40 angeschlossenen Teilnehmerstationen 10, 20, 30. Die Kommunikationssteuereinrichtung 11 kann wie ein herkömmlicher CAN-Controller ausgeführt sein.

Die Sendeeinrichtung 12 dient zum Senden der Nachrichten 45, 47 in Form von Signalen an eine andere Teilnehmerstation des Bussystems 1. Die Sendeeinrichtung 12 kann in Bezug auf ihre Sendefunktionalität wie ein herkömmlicher CAN-Transceiver ausgeführt sein.

Die Empfangseinrichtung 13 ist nachfolgend noch näher beschrieben.

Die Sende-/Empfangseinrichtung 14 kann wie ein herkömmlicher CAN-Transceiver ausgeführt sein.

Fig. 2 zeigt ein Beispiel für einen Teil eines Spannungsverlaufs U1, U2 eines ersten und zweiten Bussignals über der Zeit t, wie die Bussignale nach Senden eines Signals von der Sendeeinrichtung 12 auf dem Bus 40 übertragen werden. Das erste und zweite Bussignal können auch als erstes und zweites Signal auf dem Bus 40 bezeichnet werden. Das Signal von der Sendeeinrichtung 12 kann auch als Sendesignal bezeichnet werden.

In Fig. 2 ist nur jeweils ein Bit der beiden als Beispiel veranschaulichten Bussignale dargestellt. Das Bit hat die Zeitdauer oder Bitdauer T und Schaltflanken 51, 52, bei welchen das Bit von seinem niedrigen Signalzustand zu seinem hohen Signalzustand und zurück bzw. seinem Rezessivzustand 53 auf seinen jeweiligen Dominantzustand 54, 55 und zurück wechselt. Zudem hat das erste Bussignal in Fig. 2 eine geringere Differenzspannung U_{DIFF1} zwischen seinem Dominantzustand 54 und seinem Rezessivzustand 53 als das zweite Bussignal, das eine Differenzspannung U_{DIFF2} zwischen seinem Dominantzustand 55 und seinem Rezessivzustand 53 hat. Die Empfangseinrichtung 13 hat eine Empfangsschwelle U_{D}, oberhalb welcher die Empfangseinrichtung 13 das Bussignal erfassen kann. Bei einem herkömmlichen CAN-Transceiver liegt die Empfangsschwelle U_{D} bei ca. 0,7 V, wie in Fig. 2 eingezeichnet. Demzufolge beträgt bei diesem Beispiel die Differenzspannung U_{DIFF1} etwa 1,5 V und die Differenzspannung U_{DIFF2} etwa 3,0 V. Es sind jedoch auch andere Spannungswerte möglich.

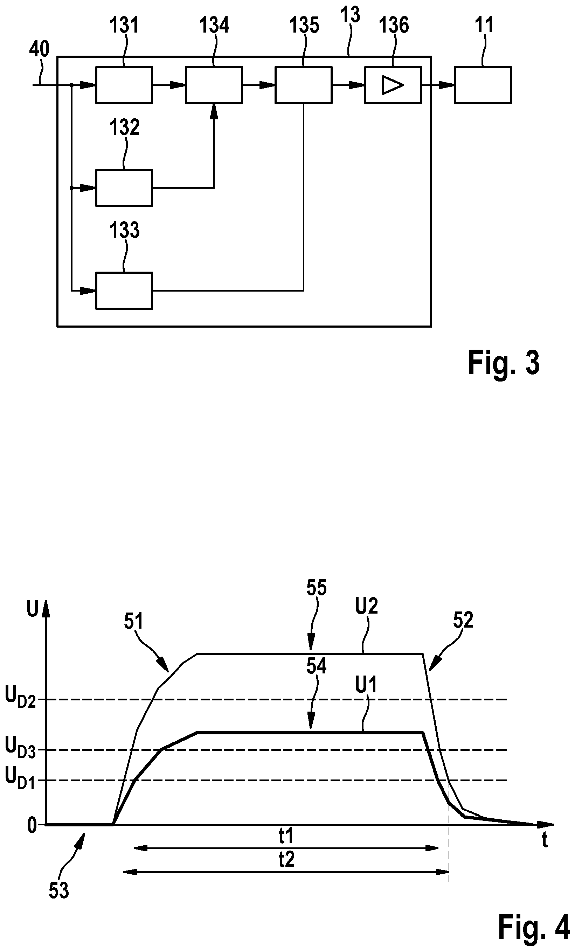

Fig. 3 zeigt den Aufbau der Empfangseinrichtung 13 genauer, welche an ihrer einen Seite an den Bus 40 und an ihrer anderen Seite an die Kommunikationssteuereinrichtung 11 angeschlossen ist. Demzufolge umfasst die Empfangseinrichtung 13 eine erste Erfassungseinrichtung 131, eine zweite Erfassungseinrichtung 132, eine dritte Erfassungseinrichtung 133, eine Bestimmungseinrichtung 134, eine Symmetrierungseinrichtung 135 und einen Empfangskomparator 136.

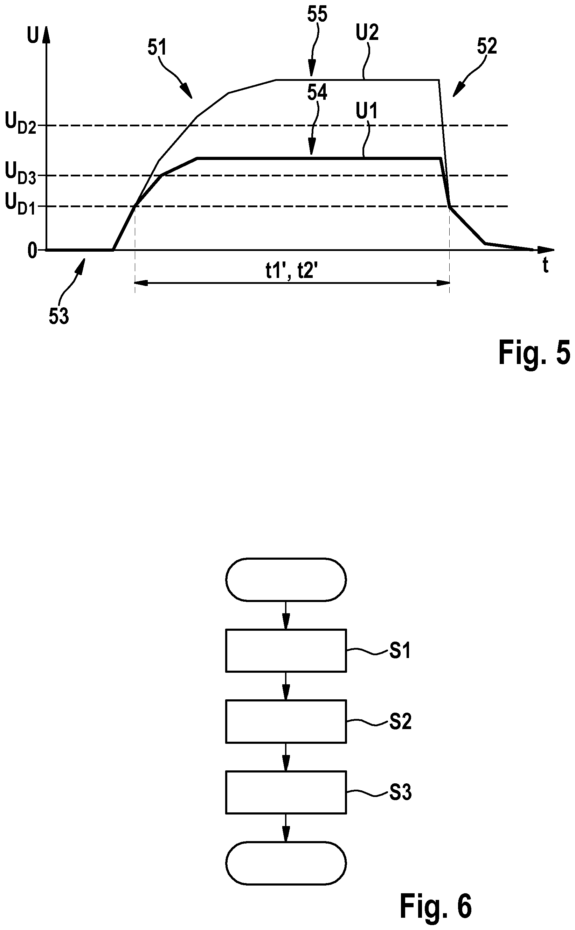

Werden über den Bus 40 Signale übertragen, wie in Fig. 2 gezeigt, empfängt die Erfassungseinrichtung 13 an ihrem Eingang bei den Erfassungseinrichtungen 131, 132, 133 von dem Bus 40 Signale mit einer Bitform, wie in Fig. 4 gezeigt. Der Empfangskomparator 136 empfängt hingegen von der Symmetrierungseinrichtung 135 Signale mit einer Bitform, wie in Fig. 5 gezeigt. Die Signale in Fig. 5 sind gegenüber den Signalen in Fig. 4 in Bezug auf ihre Bitdauer t1, t2 symmetriert, wie nachfolgend beschrieben.

In Fig. 3 wird der ersten bis dritten Erfassungseinrichtung 131, 132, 133 jeweils das auf dem Bus 40 derzeit übertragene Bussignal zugeführt. Das Bussignal kann eines der Bussignale sein, die in Fig. 2 gezeigt sind. Die erste Erfassungseinrichtung 131 erfasst einen Spannungswert des Bussignals ungleich Null, wenn das Bussignal über einem ersten vorbestimmten Wert liegt, welcher beispielsweise gleich der Spannung U_{D1} sein kann, die in Fig. 4 und Fig. 5 dargestellt ist. Die zweite Erfassungseinrichtung 132 erfasst einen Spannungswert des Bussignals ungleich Null, wenn das Bussignal über einem zweiten vorbestimmten Wert liegt, welcher beispielsweise gleich der Spannung U_{D2} sein kann, der ebenfalls in Fig. 4 und Fig. 5 gezeigt ist. Hierbei ist der zweite vorbestimmte Wert größer als der erste vorbestimmte Wert. Die dritte Erfassungseinrichtung 132 erfasst einen Spannungswert des Bussignals ungleich Null, wenn das Bussignal über einem dritten vorbestimmten Wert liegt, welcher beispielsweise gleich der Spannung U_{D3} sein kann, die ebenfalls in Fig. 4 und Fig. 5 gezeigt ist. Hierbei ist der dritte vorbestimmte Wert kleiner als der zweite vorbestimmte Wert jedoch größer als der erste vorbestimmte Wert, wie ebenfalls aus Fig. 4 und Fig. 5 ersichtlich.

Wie in Fig. 3 dargestellt, werden die Erfassungsergebnisse der ersten und zweiten Erfassungseinrichtung 131, 132 der Bestimmungseinrichtung 134 zugeführt, welche je nach vorliegendem Fall die erste oder zweite Differenzspannung U_{DIFF1}, U_{DIFF2} bestimmt. Die Bestimmungseinrichtung 134 führt das Ergebnis ihrer Bestimmung der Symmetrierungseinrichtung 135 zu, welche zur Symmetrierung der Bitdauern t1, t2 des Empfangssignals dient. Hierbei verwendet die Symmetrierungseinrichtung 135 das Ergebnis der Bestimmung der Bestimmungseinrichtung 134.

Bei dem vorliegenden Ausführungsbeispiel führt die Symmetrierungseinrichtung 135 zur Symmetrierung der Bitdauern t1, t2 des Empfangssignals von Fig. 4 eine Nachbearbeitung der Bitdauern t1, t2 auf der Grundlage des Ergebnisses der Bestimmungseinrichtung 134 durch. Hierbei verwendet die Symmetrierungseinrichtung 135 zudem ein Erfassungsergebnis der dritten Erfassungseinrichtung 133. Zusätzlich können auch noch weitere Erfassungseinrichtungen vorhanden sein, deren Erfassungsschwellen zwischen oder über den Werten U_{D1} und U_{D2} liegen können. Bei der Nachbearbeitung werden die Schaltflanken 51, 52 des Empfangssignals von Fig. 4 so verändert, dass die Bitdauern gleich sind und somit t1' = t2' gilt, wie in Fig. 5 gezeigt. Dadurch kann der Empfangskomparator 136 die in den Bits des Signals enthaltenen Informationen sicher auswerten. Somit kann die Empfangseinrichtung 13 das Bussignal unabhängig von der Differenzspannung U_{DIFF1} oder U_{DIFF2} sicher empfangen. Als Folge davon können Übertragungsfehler auch bei hoher Bitrate, wie beispielsweise bei CAN-FD, vermieden werden.

Mit der Empfangseinrichtung 13 wird also ein Verfahren zur Verbesserung der Empfangsqualität in dem Bussystem 1 ausgeführt, wie in Fig. 6 veranschaulicht.

Hierbei wird nach dem Beginn des Verfahrens bei einem Schritt S1 mit der ersten Erfassungseinrichtung 131 das digitale Signal auf dem Bus 40 erfasst, wenn ein Spannungswert des Bussignals über dem ersten vorbestimmten Wert liegt. Zudem wird mit der zweiten Erfassungseinrichtung 132 das digitale Signal auf dem Bus 40 erfasst, wenn ein Spannungswert des Bussignals über dem zweiten vorbestimmten Wert liegt, wie zuvor in Bezug auf Fig. 3 bis Fig. 5 beschrieben. Danach geht der Fluss zu einem Schritt S2 weiter.

Bei dem Schritt S2 bestimmt die Empfangseinrichtung 13, genauer gesagt ihre Bestimmungseinrichtung 134, die erste Differenzspannung U_{DIFF1} zwischen dem niedrigen und dem hohen Wert bzw. den Zuständen 53, 54, 55 des digitalen Signals auf dem Bus 40, dem Bussignal, oder die zweite Differenzspannung U_{DIFF2}. Genauer gesagt, bestimmt die Bestimmungseinrichtung 134 die erste Differenzspannung U_{DIFF1} und die zweite Differenzspannung U_{DIFF2} jeweils während der Dominantphase des Signals, also wenn das Signal in Fig. 2 und Fig. 4 vom Rezessivzustand 53 auf den Dominantzustand 54 oder 55 und zurück gewechselt ist. Danach geht der Fluss zu einem Schritt S3 weiter.

Bei dem Schritt S3 symmetriert die Symmetrierungseinrichtung 135 die Bitdauern t1, t2 des Empfangssignals von Fig. 4 auf der Grundlage des Ergebnisses der Bestimmung der Bestimmungseinrichtung 134 bei dem Schritt S2 und gibt das Signal mit den symmetrierten Bitdauern t1', t2' an die Kommunikationssteuereinrichtung 11 aus. Danach ist das Verfahren beendet.

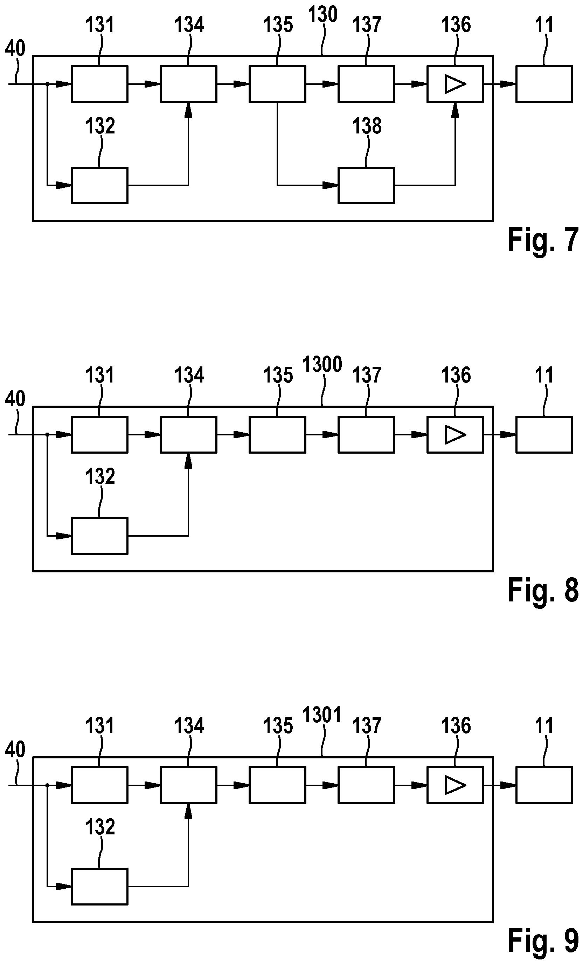

Gemäß einem zweiten Ausführungsbeispiel ist die Symmetrierungseinrichtung 135 zur Anpassung von Eingangsfiltern am Eingang des Empfangskomparators 136 der Teilnehmerstationen 10, 30 auf der Grundlage des Ergebnisses der Bestimmungseinrichtung 134 ausgestaltet. Bei diesem Ausführungsbeispiel ist das Bussystem in weiten Teilen aufgebaut, wie zuvor in Bezug auf das erste Ausführungsbeispiel beschrieben. Im Unterschied zum ersten Ausführungsbeispiel umfassen die Teilnehmerstationen 10, 30 bei dem vorliegenden Ausführungsbeispiel jedoch anstelle der Empfangseinrichtung 13 eine Empfangseinrichtung 130, deren Aufbau in Fig. 7 dargestellt ist.

In Fig. 7 umfasst die Empfangseinrichtung 130 gemäß dem vorliegenden Ausführungsbeispiel wieder die erste Erfassungseinrichtung 131, die zweite Erfassungseinrichtung 132, die Bestimmungseinrichtung 134, die Symmetrierungseinrichtung 135 und den Empfangskomparator 136, jedoch keine dritte Erfassungseinrichtung 133. Als weiteren Unterschied zum ersten Ausführungsbeispiel umfasst die Empfangseinrichtung 130 gemäß dem vorliegenden Ausführungsbeispiel ein erstes und ein zweites Eingangsfilter 137, 138, welche am Eingang des Empfangskomparators 136 angeordnet sind. Es können auch noch mehr als die beiden Eingangsfilter 137, 138 am Eingang des Empfangskomparators 136 vorhanden sein.

Die Symmetrierungseinrichtung 135 symmetriert bei dem vorliegenden Ausführungsbeispiel die Bitdauern t1, t2 der Empfangssignale in Fig. 4, indem sie bei dem Schritt S3 die Eingangsfilter 137, 138 abhängig von dem Buszustand bzw. dem Pegel auf dem Bus 40, also niedriger oder hoher Signalzustand bzw. Rezessivzustand oder Dominantzustand 53, 54, 55 (Fig. 2) des Bussignals, umschaltet. Demzufolge leitet die Symmetrierungseinrichtung 135 das Empfangssignal gemäß Fig. 4 auf der Grundlage des Bestimmungsergebnisses der Bestimmungseinrichtung 134 und des jeweils vorliegenden Buszustands entweder an das erste Eingangsfilter 137 oder das zweite Eingangsfilter 138 weiter.

Auf diese Weise kann die Empfangseinrichtung 130 das Bussignal unabhängig von der Differenzspannung U_{DIFF1} oder U_{DIFF2} sicher empfangen. Als Folge davon können auch bei dem vorliegenden Ausführungsbeispiel Übertragungsfehler selbst bei hoher Bitrate, wie beispielsweise bei CAN-FD, vermieden werden.

Gemäß einem dritten Ausführungsbeispiel kann bei einer Empfangseinrichtung 1300 auch nur ein Eingangsfilter 137 vorhanden sein, welches regelbar ausgestaltet ist, wie in Fig. 8 gezeigt. Somit passt die Symmetrierungseinrichtung 135 das Eingangsfilter 137 am Eingang des Empfangskomparators 136 der Teilnehmerstationen 10, 30 auf der Grundlage des Ergebnisses der Bestimmungseinrichtung 134 durch Regeln seiner Durchlassschwelle oder Erkennungsschwelle anhand der Bitdauern t1, t2 in Fig. 4 an. Ansonsten ist die Empfangseinrichtung 1300 in Fig. 8 gleich der Empfangseinrichtung 130 von Fig. 7 aufgebaut.

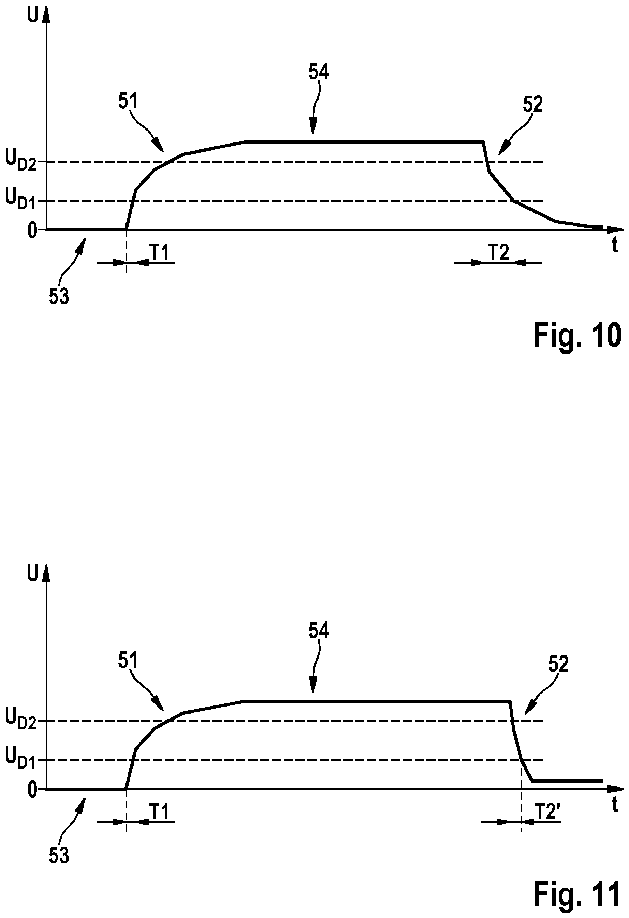

Fig. 9 zeigt eine Empfangseinrichtung 1301 gemäß einem vierten Ausführungsbeispiel, die sehr ähnlich wie die Empfangseinrichtung 1300 gemäß dem dritten Ausführungsbeispiel aufgebaut ist. Auch die Empfangseinrichtung 1301 gemäß dem vorliegenden Ausführungsbeispiel umfasst nur ein Eingangsfilter 137, welches in Bezug auf seine Grenzfrequenz regelbar ausgestaltet ist. Hierbei bestimmen die Erfassungseinrichtungen 131, 132 den Buszustand auf dem Bus 40, nämlich ob ein Dominantzustand 54, 55 oder ein Rezessivzustand 53 vorliegt. Je nach erfasstem Zustand, symmetriert die Symmetrierungseinrichtung 135 die Zeitdauer T1 einer Verzögerungszeit bei der steigenden Flanke 51 und die Zeitdauer T2 einer Verzögerungszeit bei der fallenden Flanke 52 von dem Zustand in Fig. 10 zu dem Zustand in Fig. 11. Im Falle des Rezessivzustands passt die Symmetrierungseinrichtung 135 die Grenzfrequenz des Eingangsfilters 137 am Eingang des Empfangskomparators 136 der Teilnehmerstationen 10, 30 derart an, dass die Grenzfrequenz des Eingangsfilters 137 niedriger als bei dem Fall ist, bei welchem ein Dominantzustand vorliegt. Dadurch wird ein Empfangssignal gemäß Fig. 10, bei welchem eine Zeitdauer T1 einer Verzögerungszeit bei der steigenden Flanke 51 kleiner als eine Zeitdauer T2 einer Verzögerungszeit bei der fallenden Flanke 52 ist, verändert in ein Signal gemäß Fig. 11. Bei dem modifizierten Empfangssignal in Fig. 11 ist die Zeitdauer T1 der Verzögerungszeit bei der steigenden Flanke 51 des modifizierten Empfangssignals gleich einer Zeitdauer T2' einer Verzögerungszeit bei der fallenden Flanke 52 des modifizierten Empfangssignals.

Demzufolge passt die Symmetrierungseinrichtung 135 auch bei dem vorliegenden Ausführungsbeispiel das Eingangsfilter 137 am Eingang des Empfangskomparators 136 der Teilnehmerstationen 10, 30 auf der Grundlage des Ergebnisses der Bestimmungseinrichtung 134 durch Regeln seiner Grenzfrequenz anhand des Buszustands an. Ansonsten ist die Empfangseinrichtung 1301 in Fig. 9 gleich der Empfangseinrichtung 1300 von Fig. 8 aufgebaut.

Gemäß einer Modifikation des vierten Ausführungsbeispiels umfasst die Empfangseinrichtung 1301 nur die erste Erfassungseinrichtung 131 oder die zweite Erfassungseinrichtung 132. In diesem Fall kann auch die Bestimmungseinrichtung 134 entfallen, so dass die Symmetrierungseinrichtung 135 das Eingangsfilter 137 am Eingang des Empfangskomparators 136 der Teilnehmerstationen 10, 30 auf der Grundlage des Ergebnisses der ersten oder zweiten Erfassungseinrichtung 131,132 durch Regeln seiner Grenzfrequenz anhand des Buszustands anpasst.

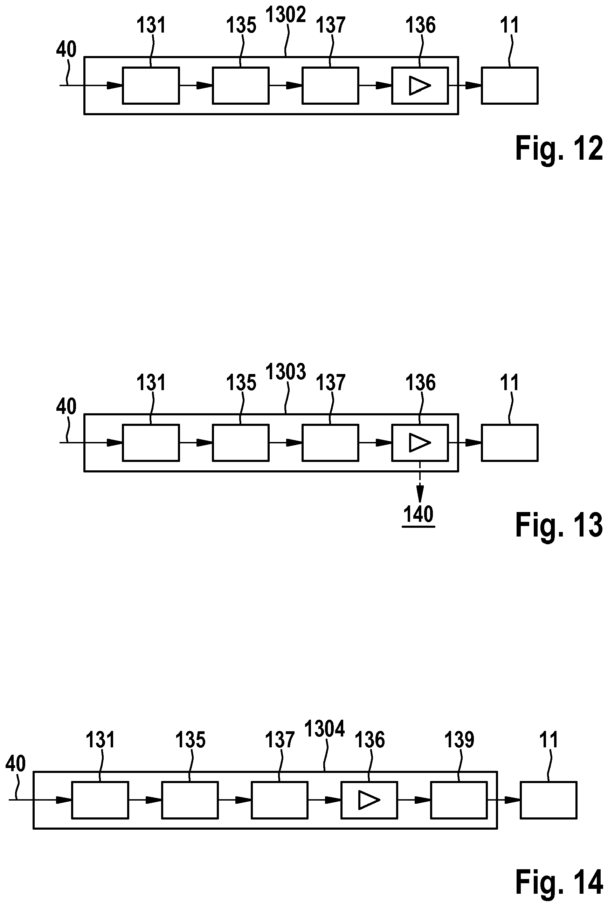

Fig. 12 zeigt eine Empfangseinrichtung 1302 gemäß einem fünften Ausführungsbeispiel. Gemäß dem fünften Ausführungsbeispiel wird von der Symmetrierungseinrichtung 135 eine Bandbreite des Eingangsfilters 137 erhöht, wenn sich das Bussystem 1 in einem Betrieb befindet, bei welchem Daten mit einer Bitrate größer 1 Mbit/s übertragen werden, wie beispielsweise im CAN-FD-Betrieb. Demzufolge kann die Erfassungseinrichtung 131 erfassen, ob auf dem Bus 40 Daten mit einer Bitrate größer 1 Mbit/s übertragen werden. Je nach Anwendung kann bei Vorliegen des Betriebs, bei welchem Daten mit einer Bitrate größer 1 Mbit/s übertragen werden, das Eingangsfilter 137 des Eingangskomparators 136 über eine Bandende-Programmierung seines Durchlassfrequenzbands angepasst werden. Die Anpassung des Eingangsfilters 137 kann jedoch auch adaptiv im Betrieb erfolgen. Bei dem vorliegenden Ausführungsbeispiel können/kann auch die zweite Erfassungseinrichtung 132 und/oder die Bestimmungseinrichtung 134 vorhanden sein.

Fig. 13 zeigt eine Empfangseinrichtung 1303 gemäß einem sechsten Ausführungsbeispiel. Gemäß dem sechsten Ausführungsbeispiel wird von der Symmetrierungseinrichtung 135 eine Bandbreite des Eingangsfilters 137 verringert, wenn eine hochfrequente Störstrahlung 140 beispielsweise mit einem Hochfrequenzdetektor als Erfassungseinrichtung 131 erfasst wird. Demzufolge kann die erste Erfassungseinrichtung 131 das Auftreten einer hochfrequenten Störstrahlung 140 erfassen, aufgrund welcher eine Datenübertragung im Bussystem 1 gestört wird oder werden könnte. Unter hochfrequenter Störstrahlung werden Signale mit Frequenzen verstanden, welche in einem Bereich von ca. 500 kHz bis ca. 10 GHz und insbesondere in einem Bereich von ca. 900 kHz bis ca. 3 GHz liegen. Besonders bevorzugt werden unter hochfrequenter Störstrahlung Signale mit Frequenzen verstanden, welche in einem Bereich von ca. 1 MHz bis ca. 1 GHz liegen.

Auch bei dem vorliegenden Ausführungsbeispiel kann je nach Anwendung bei einem Auftreten einer hochfrequenten Störstrahlung 140 das Eingangsfilter 137 über eine Bandende-Programmierung angepasst werden. Dadurch wird die hochfrequente Störstrahlung 140 aus dem Empfangssignal herausgefiltert, wie in Fig. 13 veranschaulicht. Die Anpassung des Eingangsfilters 137 kann jedoch auch adaptiv im Betrieb erfolgen. Auch bei dem vorliegenden Ausführungsbeispiel können/kann die zweite Erfassungseinrichtung 132 und/oder die Bestimmungseinrichtung 134 vorhanden sein.

Fig. 14 zeigt eine Empfangseinrichtung 1304 gemäß einem siebenten Ausführungsbeispiel. Gemäß dem siebenten Ausführungsbeispiel ist nach dem Empfangskomparator 136 eine Nachbearbeitungseinrichtung 139 der Empfangseinrichtung 1304 geschaltet, welche das aus dem Empfangskomparator 136 ausgegebene digitale Signal digital nachbearbeitet. Dadurch kann die Empfangsqualität der Empfangseinrichtung 1304 kostengünstig noch weiter erhöht werden. Eine teurere analoge Nachbearbeitung des vom Bus 40 empfangenen Signals vor dem Empfangskomparator 136 kann entfallen. Bei der Nachbearbeitung können auch Informationen aus weiteren Schwellen herangezogen werden, die beispielsweise mit den Erfassungseinrichtungen 132 und 133 gemäß dem ersten oder dem zweiten bis vierten Ausführungsbeispiel erfasst werden können.

Somit finden bei den zuvor beschriebenen Ausführungsbeispielen und deren Modifikationen die erste Erfassungseinrichtung 131 und/oder die zweite Erfassungseinrichtung 132 zur Erfassung eines Buszustands des Busses 40 des Bussystems 1 Verwendung. Hierbei ist der Buszustand bei dem ersten bis vierten Ausführungsbeispiel ein Spannungswert eines digitalen Signals auf dem Bus 40, welcher Spannungswert über einem vorbestimmten Wert liegt. Bei dem dritten und vierten Ausführungsbeispiel ist der Buszustand insbesondere ein Dominant- oder Rezessivzustand 53, 54, 55 des Busses 40. Darüber hinaus ist der Buszustand bei dem fünften Ausführungsbeispiel eine Bitrate eines auf dem Bus 40 übertragenen Signals. Zudem ist der Buszustand bei dem sechsten Ausführungsbeispiel ein hochfrequentes Störsignal. Der Buszustand bei dem siebenten Ausführungsbeispiel kann einer der Buszustände sein, wie bei dem ersten bis sechsten Ausführungsbeispiel beschrieben.

Alle zuvor beschriebenen Ausgestaltungen des Bussystems 1, der Teilnehmerstationen 10, 30, der Empfangseinrichtungen 13, 130, 1300, 1301, 1302 und des Verfahrens können einzeln oder in allen möglichen Kombinationen Verwendung finden. Insbesondere ist eine beliebige Kombination der Merkmale der Ausführungsbeispiele und/oder deren Modifikationen möglich. Zusätzlich sind insbesondere folgende Modifikationen denkbar.

Das Bussystem 1 gemäß den Ausführungsbeispielen ist insbesondere ein CAN-Netzwerk oder ein CAN FD-Netzwerk oder ein FlexRay-Netzwerk.

Die Anzahl und Anordnung der Teilnehmerstationen 10, 20, 30 in dem Bussystem 1 der Ausführungsbeispiele ist beliebig. Insbesondere können auch nur Teilnehmerstationen 10 oder nur Teilnehmerstationen 30 oder nur Teilnehmerstationen 10, 30 in dem Bussystem 1 der Ausführungsbeispiele vorhanden sein.

Die zuvor beschriebenen Teilnehmerstationen 10, 30 und das von ihnen ausgeführte Verfahren kann besonders vorteilhaft bei einem modifizierten Datenprotokoll angewendet werden, welches am 02.05.2011 auf der Internet-Seite http://www.semiconductors.bosch.de/ veröffentlichte Dokument "CAN with Flexible Data-Rate, White Paper, Version 1.0" veröffentlicht wurde und welches unter anderem eine Vergrößerung des Datenfeldes sowie für einen Teil der CAN-Nachricht nach erfolgter Arbitrierung eine Verkürzung der Bitlänge ermöglicht.

Die Teilnehmerstationen 10, 30 stellen besonders für CAN-FD eine Möglichkeit dar, die Empfangsgüte von CAN-FD in den Bereich von üblichen CAN Übertragungen bei Nutzung einer deutlich höheren Datenrate anzuheben.

Die Funktionalität der zuvor beschriebenen Ausführungsbeispiele lässt sich auch in einem Transceiver bzw. einer Sende-/Empfangseinrichtung 13 oder auch in einer Kommunikationssteuereinrichtung 11 usw. umsetzen. Zusätzlich oder alternativ kann die Sendeeinrichtung 12 in existierende Produkte integriert werden.

## Patentansprüche

1. Teilnehmerstation (10; 30) für ein Bussystem (1), mit einer Erfassungseinrichtung (131) zum Empfang eines Bussignals von einem Bus (40) des Bussystems (1) und zur Erfassung eines Buszustands eines Busses (40) des Bussystems (1) auf der Grundlage des empfangenen Bussignals, und
einer Symmetrierungseinrichtung (135) zur Durchführung einer Symmetrierung eines Bits des vom Bus (40) empfangenen Bussignals auf der Grundlage des Ergebnisses der Erfassungseinrichtung (134),
wobei die Symmetrierungseinrichtung (135) ausgestaltet ist, die Bitdauern (t1; t2) und/oder die Verzögerungszeitdauern (T1, T2) der steigenden und fallenden Flanke (51, 52) eines Bits des vom Bus (40) empfangenen Bussignals zu symmetrieren.

2. Teilnehmerstation (10; 30) nach Anspruch 1, wobei der Buszustand eine Bitrate des empfangenen Bussignals und/oder ein Rezessiv- oder Dominantzustand (53, 54, 55) des Busses (40) und/oder ein hochfrequentes Störsignal und/oder ein Spannungswert eines digitalen Signals auf dem Bus (40) ist, welcher Spannungswert über einem vorbestimmten Wert liegt.

3. Teilnehmerstation (10; 30) nach Anspruch 1 oder 2,
wobei die Erfassungseinrichtung eine erste Erfassungseinrichtung (131) ist zur Erfassung eines digitalen Signals auf einem Bus (40) des Bussystems (1), wenn ein Spannungswert des Signals über einem ersten vorbestimmten Wert liegt,
wobei die Teilnehmerstation (10; 30) zudem umfasst eine zweite Erfassungseinrichtung (132) zur Erfassung des digitalen Signals auf dem Bus (40) des Bussystems (1), wenn der Spannungswert des Signals über einem zweiten vorbestimmten Wert liegt, wobei der zweite vorbestimmte Wert größer als der erste vorbestimmte Wert ist, und eine Bestimmungseinrichtung (134) zur Bestimmung einer Differenzspannung (U_{DIFF1}; U_{DIFF2}) zwischen einem Dominantzustand und einem Rezessivzustand des digitalen Signals auf dem Bus (40) auf der Grundlage der Erfassungsergebnisse der ersten und zweiten Erfassungseinrichtung (131, 132), und
wobei die Symmetrierungseinrichtung (135) ausgestaltet ist zur Symmetrierung der Bitdauern (t1; t2) des vom Bus (40) empfangenen Signals auf der Grundlage des Ergebnisses der Bestimmungseinrichtung (134).

4. Teilnehmerstation (10; 30) nach Anspruch 3, wobei die Symmetrierungseinrichtung (135) zur Nachbearbeitung der Bitdauern (t1; t2) auf der Grundlage des Ergebnisses der Bestimmungseinrichtung (135) und mindestens einer weiteren Erfassungseinrichtung (133) ausgestaltet ist und/oder wobei eine Nachbearbeitungseinrichtung (139) zur digitalen Nachbearbeitung des empfangenen Signals ausgestaltet ist.

5. Teilnehmerstation (10; 30) nach einem der vorangehenden Ansprüche, wobei die Symmetrierungseinrichtung (135) zur Anpassung mindestens eines Eingangsfilters (137) am Empfangskomparator (136) der Teilnehmerstation (10; 30) auf der Grundlage des Ergebnisses der Erfassungseinrichtung (131) oder der Bestimmungseinrichtung (134) ausgestaltet ist.

6. Teilnehmerstation (10; 30) nach einem der vorangehenden Ansprüche, wobei die Symmetrierungseinrichtung (135) zur Anpassung des mindestens eines Eingangsfilters (137) durch Bandende-Programmierung oder adaptiv im Betrieb der Teilnehmerstation (10; 30) ausgestaltet ist.

7. Teilnehmerstation (10; 30) nach einem der vorangehenden Ansprüche, wobei die Symmetrierungseinrichtung (135) zur Anpassung von Eingangsfiltern (137, 138) am Empfangskomparator (136) der Teilnehmerstation (10; 30) durch Umschaltung der Eingangsfilter (137, 138) ausgestaltet ist.

8. Teilnehmerstation (10; 30) nach einem der vorangehenden Ansprüche, wobei die Symmetrierungseinrichtung (135) zur Anpassung mindestens eines Eingangsfilters (137, 138) am Empfangskomparator der Teilnehmerstation durch Regelung der Erkennungsschwelle des mindestens einen Eingangsfilters (137, 138) ausgestaltet ist.

9. Bussystem (1), mit
einem Bus (40), und
mindestens zwei Teilnehmerstationen (10, 20, 30), welche über den Bus (40) derart miteinander verbunden sind, dass sie miteinander kommunizieren können,
wobei mindestens eine der mindestens zwei Teilnehmerstationen (10, 20, 30) eine Teilnehmerstation (10; 30) nach einem der vorangehenden Ansprüche ist.

10. Verfahren zur Verbesserung der Empfangsqualität in einem Bussystem (1), mit den Schritten
Empfangen, an einer Erfassungseinrichtung (131) eines Bussignals von einem Bus (40) des Bussystems (1),
Erfassen, mit der Erfassungseinrichtung (131), eines Buszustands eines Busses (40) des Bussystems (1) auf der Grundlage des empfangenen Bussignals, und
Symmetrieren eines Bits des vom Bus (40) empfangenen Bussignals mit einer Symmetrierungseinrichtung (135) auf der Grundlage des Ergebnisses eines Erfassens mit der Erfassungseinrichtung (134),
wobei die Bitdauern (t1; t2) oder die Verzögerungszeitdauern (T1, T2) der steigenden und fallenden Flanke (51, 52) eines Bits des vom Bus (40) empfangenen Bussignals symmetriert werden.

## Claims

1. Subscriber station (10; 30) for a bus system (1), comprising
a detection device (131) for receiving a bus signal from a bus (40) of the bus system (1) and for detecting a bus state of a bus (40) of the bus system (1) on the basis of the received bus signal, and
a balancing device (135) for carrying out a balancing of a bit of the bus signal received from the bus (40) on the basis of the result of the detection device (134),
wherein the balancing device (135) is configured to balance the bit durations (t1; t2) and/or the delay time durations (T1, T2) of the rising and falling edges (51, 52) of a bit of the bus signal received from the bus (40).

2. Subscriber station (10; 30) according to Claim 1, wherein the bus state is a bit rate of the received bus signal and/or a recessive or dominant state (53, 54, 55) of the bus (40) and/or a radiofrequency interference signal and/or a voltage value of a digital signal on the bus (40), which voltage value lies above a predetermined value.

3. Subscriber station (10; 30) according to Claim 1 or 2,
wherein the detection device is a first detection device (131) for detecting a digital signal on a bus (40) of the bus system (1) if a voltage value of the signal lies above a first predetermined value,
wherein the subscriber station (10; 30) additionally comprises a second detection device (132) for detecting the digital signal on the bus (40) of the bus system (1) if the voltage value of the signal lies above a second predetermined value, wherein the second predetermined value is greater than the first predetermined value, and a determining device (134) for determining a difference voltage (U_{DIFF1} ; U_{DIFF2}) between a dominant state and a recessive state of the digital signal on the bus (40) on the basis of the detection results of the first and second detection devices (131, 132), and
wherein the balancing device (135) is configured for balancing the bit durations (t1; t2) of the signal received from the bus (40) on the basis of the result of the determining device (134).

4. Subscriber station (10; 30) according to Claim 3, wherein the balancing device (135) is configured for postprocessing the bit durations (t1; t2) on the basis of the result of the determining device (135) and at least one further detection device (133) and/or wherein a postprocessing device (139) is configured for digitally postprocessing the received signal.

5. Subscriber station (10; 30) according to any of the preceding claims, wherein the balancing device (135) is configured for adapting at least one input filter (137) at the reception comparator (136) of the subscriber station (10; 30) on the basis of the result of the detection device (131) or the determining device (134).

6. Subscriber station (10; 30) according to any of the preceding claims, wherein the balancing device (135) is configured for adapting the at least one input filter (137) by end-of-band programming or adaptively during operation of the subscriber station (10; 30).

7. Subscriber station (10; 30) according to any of the preceding claims, wherein the balancing device (135) is configured for adapting input filters (137, 138) at the reception comparator (136) of the subscriber station (10; 30) by switching over the input filters (137, 138).

8. Subscriber station (10; 30) according to any of the preceding claims, wherein the balancing device (135) is configured for adapting at least one input filter (137, 138) at the reception comparator of the subscriber station by regulating the identification threshold of the at least one input filter (137, 138).

9. Bus system (1), comprising
a bus (40), and
at least two subscriber stations (10, 20, 30) which are connected to one another via the bus (40) in such a way that they can communicate with one another,
wherein at least one of the at least two subscriber stations (10, 20, 30) is a subscriber station (10; 30) according to any of the preceding claims.

10. Method for improving the reception quality in a
bus system (1), comprising the steps of receiving, at a detection device (131), a bus signal from a bus (40) of the bus system (1), detecting, by means of the detection device (131), a bus state of a bus (40) of the bus system (1) on the basis of the received bus signal, and
balancing a bit of the bus signal received from the bus (40) by means of a balancing device (135) on the basis of the result of detecting by means of the detection device (134), wherein the bit durations (t1; t2) or the delay time durations (T1, T2) of the rising and falling edges (51, 52) of a bit of the bus signal received from the bus (40) are balanced.

## Revendications

1. Station d'abonné (10 ; 30) pour un système de bus (1), comprenant
un dispositif de détection (131) destiné à recevoir un signal de bus d'un bus (40) du système de bus (1) et à détecter un état de bus d'un bus (40) du système de bus (1) en se basant sur le signal de bus reçu, et
un dispositif de symétrisation (135) destiné à réaliser une symétrisation d'un bit du signal de bus reçu du bus (40) en se basant sur le résultat du dispositif de détection (134),
le dispositif de symétrisation (135) étant configuré pour symétriser les durées de bit (t1 ; t2) et/ou les durées de retard (T1, T2) des fronts montant et descendant (51, 52) d'un bit du signal de bus reçu du bus (40).

2. Station d'abonné (10 ; 30) selon la revendication 1, l'état de bus étant un débit binaire du signal de bus reçu et/ou un état récessif ou dominant (53, 54, 55) du bus (40) et/ou un signal parasite à haute fréquence et/ou une valeur de tension d'un signal numérique sur le bus (40), ladite valeur de tension se trouvant au-dessus d'une valeur prédéterminée.

3. Station d'abonné (10 ; 30) selon la revendication 1 ou 2,
le dispositif de détection étant un premier dispositif de détection (131) destiné à détecter un signal numérique sur un bus (40) du système de bus (1) lorsqu'une valeur de tension du signal se trouve au-dessus d'une première valeur prédéterminée,
la station d'abonné (10 ; 30) comprenant en outre un deuxième dispositif de détection (132) destiné à détecter le signal numérique sur le bus (40) du système de bus (1) lorsque la valeur de tension du signal se trouve au-dessus d'une deuxième valeur prédéterminée, la deuxième valeur prédéterminée étant supérieure à la première valeur prédéterminée, et un dispositif de détermination (134) destiné à déterminer une tension différentielle (U_{DIFF1} ; U_{DIFF2}) entre un état dominant et un état récessif du signal numérique sur le bus (40) en se basant sur les résultats de détection du premier et du deuxième dispositif de détection (131, 132), et
le dispositif de symétrisation (135) étant configuré pour symétriser les durées de bit (t1 ; t2) du signal reçu par le bus (40) en se basant sur le résultat du dispositif de détermination (134).

4. Station d'abonné (10 ; 30) selon la revendication 3, le dispositif de symétrisation (135) étant configuré pour un post-traitement des durées de bit (t1 ; t2) en se basant sur le résultat du dispositif de détermination (135) et d'au moins un dispositif de détection (133) supplémentaire et/ou un dispositif de post-traitement (139) étant configuré pour le post-traitement numérique du signal reçu.

5. Station d'abonné (10 ; 30) selon l'une des revendications précédentes, le dispositif de symétrisation (135) étant configuré pour adapter au moins un filtre d'entrée (137) au niveau du comparateur d'entrée (136) de la station d'abonné (10 ; 30) en se basant sur le résultat du dispositif de détection (131) ou du dispositif de détermination (134).

6. Station d'abonné (10 ; 30) selon l'une des revendications précédentes, le dispositif de symétrisation (135) étant configuré pour adapter l'au moins un filtre d'entrée (137) par programmation de fin de bande ou de manière adaptative durant le fonctionnement de la station d'abonné (10 ; 30).

7. Station d'abonné (10 ; 30) selon l'une des revendications précédentes, le dispositif de symétrisation (135) étant configuré pour adapter des filtres d'entrée (137, 138) au niveau du comparateur d'entrée (136) de la station d'abonné (10 ; 30) par permutation des filtres d'entrée (137, 138).

8. Station d'abonné (10 ; 30) selon l'une des revendications précédentes, le dispositif de symétrisation (135) étant configuré pour adapter au moins un filtre d'entrée (137, 138) au niveau du comparateur d'entrée de la station d'abonné par régulation du seuil de reconnaissance de l'au moins un filtre d'entrée (137, 138).

9. Système de bus (1), comprenant
un bus (40), et
au moins deux stations d'abonné (10, 20, 30) qui sont reliées entre elles par le biais du bus (40) de telle sorte qu'elles peuvent communiquer entre elles,
au moins l'une des au moins deux stations d'abonné (10, 20, 30) étant une station d'abonné (10 ; 30) selon l'une des revendications précédentes.

10. Procédé d'amélioration de la qualité de réception dans un système de bus (1), comprenant les étapes suivantes
réception, au niveau d'un dispositif de détection (131), d'un signal de bus d'un bus (40) du système de bus (1), détection, avec le dispositif de détection (131), d'un état de bus d'un bus (40) du système de bus (1) en se basant sur le signal de bus reçu, et
symétrisation d'un bit du signal de bus reçu par le bus (40) avec un dispositif de symétrisation (135) en se basant sur le résultat d'une détection avec le dispositif de détection (134),
les durées de bit (t1 ; t2) ou les durées de retard (T1, T2) des fronts montant et descendant (51, 52) d'un bit du signal de bus reçu par le bus (40) étant symétrisées.
